# EUROPEAN PATENT APPLICATION

(11) **EP 3 985 692 A1**
(43) Date of publication of application: **20.04.2022**
(21) Application number: 20201751.3
(22) Date of filing: 14.10.2020
(51) Int. Cl.: H01F 13/00, G01D 5/14

(54) **WRITING HEAD AND METHOD OF WRITING A MAGNETIZATION PATTERN**

(71) Applicant: Universität Wien, 1010 Vienna (AT)
(72) Inventor: The designation of the inventor has not yet been filed
(74) Representative: J A Kemp LLP

(57) **Abstract**

Writing heads for writing a magnetization pattern to a magnetic scale are disclosed. In one arrangement, a support member supports a magnetic scale. A core member is provided that provides a continuous path of soft magnetic material between a writing pole surface and a return pole surface. The writing pole surface faces towards and is spaced apart from a first surface portion of the support member to define a gap. The return pole surface faces or contacts a second surface portion of the support member. A magnetic circuit is thus defined comprising the support member and the core member. A coil generates a magnetic field in the magnetic circuit that passes through a portion of the magnetic scale that is in the gap.

## Description

The invention relates to writing a magnetization pattern to a magnetic scale.

Magnetic encoders are widely used in today's technological world, with applications ranging from absolute position measurement for elevator systems to velocity measurements of rotary motors. The magnetic encoders use magnetic scales that are magnetized in such a fashion that bits formed from units having a width of one Pole Pitch (PP) retain a magnetic encoding scheme. For example, one can make use of a pseudo random coding (PRC) encoding scheme to have a unique pattern. By reading the magnetic field at a given height with respect to the encoded scale, one can obtain the absolute position of a read head relative to the magnetic scale with high precision, allowing precise measurements of displacement to be performed (e.g. to locate elevators or motor components). The magnetic scales can be made of pressurized ferrite particles, which have a low coercive field, Hc (the magnetic field needed to demagnetize the material). The desired pattern of magnetization can be written using a single pole write head driven by a coil. By alternating the polarization of the magnetic field it is possible to write a corresponding sequence of positive or negative bits into the magnetic scale.

A limitation of typical magnetic scales is that the magnetic field only extends a small distance away from the magnetized material. This means that read heads need to be located very close to the magnetic scale and/or highly sensitive magnetic field sensors are required.

It is an object of the present invention to improve how magnetization patterns are written to magnetic scales.

According to an aspect of the invention, there is provided a writing head for writing a magnetization pattern to a magnetic scale, the writing head comprising: a support member comprising soft magnetic material and a support surface for supporting a magnetic scale; a core member comprising soft magnetic material, the core member being shaped to provide a continuous path of the soft magnetic material between a writing pole surface and a return pole surface, the writing pole surface facing towards and being spaced apart from a first surface portion of the support member to define a gap for receiving a portion of a magnetic scale to be written to, the return pole surface being configured to face, or to contact, a second surface portion of the support member to define a magnetic circuit comprising the support member and the core member; and a coil for generating a magnetic field in the magnetic circuit such that when a portion of a magnetic scale is provided in the gap the generated magnetic field will pass through the portion of the magnetic scale.

Providing the core member with the writing pole and return pole surfaces configured as described above allows the portion of the magnetic circuit completed by air to be minimized. For the same applied current in the coil it is possible to apply a higher magnetic field to the magnetic scale than would be possible using arrangements commonly used in the prior art with only one magnetic pole next to the magnetic scale material.

The core member geometry may provide a greater length over which to provide the coil, which may facilitate use of higher currents, which further increases the size of magnetic fields that can be applied.

In an embodiment, the magnetic scale comprises one or more of the following: NdFeB, AlNiCo, SmFeN, and SmCo. Other hard magnetic materials with high remanence may also be used. Desirably, the magnetic scale comprises a crystalline film with a crystalline easy axis perpendicular to the film surface. This leads to a particularly large saturation magnetization. Magnetic scales having grains with randomly oriented easy axes may also be used.

The ability to apply higher magnetic fields more easily allows materials with high coercivities to be used as magnetic scales, including materials with high remanence such as NdFeB, AlNiCo, SmFeN, and SmCo. Writing to magnetic scales with higher remanence makes it possible to provide longer reading distances, as well as improved stability and/or durability of the encoded magnetic scales.

According to a further aspect of the invention, there is provided a method of writing a magnetization pattern to a magnetic scale, comprising: providing a core member comprising soft magnetic material, the core member being shaped to provide a continuous path of the soft magnetic material between a writing pole surface and a return pole surface, the writing pole surface facing towards and being spaced apart from a first surface portion of a support member to define a gap for receiving a portion of a magnetic scale to be written to, the return pole surface being configured to face, or to contact, a second surface portion of the support member to define a magnetic circuit comprising the support member and the core member; providing a portion of a magnetic scale in the gap and supported by the support member; and generating a magnetic field in the magnetic circuit that passes through the portion of the magnetic scale.

The invention will now be further described, by way of example, with reference to the accompanying drawings, which are summarised below.
Figure 1 is a schematic perspective view of a core element for a writing head of the prior art;
Figure 2 is a side view of a writing head using the core element of Figure 1;
Figure 3 is a schematic perspective view of elements of a writing head for planar, linear magnetic scales;
Figure 4 is a schematic front view of a writing head of the type depicted in Figure 3;
Figure 5 is a schematic right-side view of the writing head of Figure 4;
Figure 6 is a schematic top view of an example planar magnetic scale having a linear magnetization pattern path;
Figure 7 is a schematic perspective view of an example planar magnetic scale having a curved magnetization pattern path;
Figure 8 is a schematic perspective view of an example non-planar magnetic scale having a tubular form;
Figure 9 is a schematic perspective view of elements of a writing head for planar, circular magnetic scales;
Figure 10 is a schematic front view of a writing head of the type depicted in Figure 9;
Figure 11 is a schematic perspective view of elements of a writing head for tubular magnetic scales;
Figure 12 is a schematic front view of a writing head of the type depicted in Figure 11;
Figure 13 is a schematic right-side view of the writing head of Figure 12;
Figure 14 is a graph comparing a range of write fields made available by an embodiment of the present disclosure in comparison with a prior art alternative; and
Figure 15 is a schematic side sectional view of a portion of a laminated structure of an example core member.

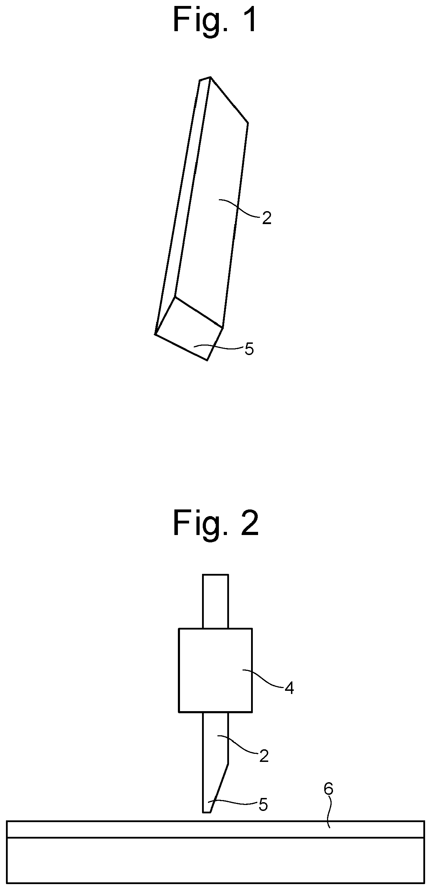

Figures 1 and 2 depict arrangements of the prior art. A core element 2 as depicted in Figure 1 is magnetized by passing a current through a coil 4 wrapping around the core element 2. The resulting magnetic field near a tip region 5 of the core element 2 is used to magnetize a magnetic scale 6 positioned beneath the tip region 5. A maximum field that can be achieved with an arrangement of this type is relatively limited, which in turn limits the range of materials that can be magnetized effectively. The reason for the small field is a strong self-demagnetizing effect due to the magnetic charges arising at the bottom and top pole of the core element 2. For example, some materials with high coercivity will not be magnetizable and the magnetic pattern cannot be written on the magnetic scale.

Embodiments of the present disclosure provide writing heads and associated methods that allow a broader range of materials to be magnetized, including materials having higher coercivity.

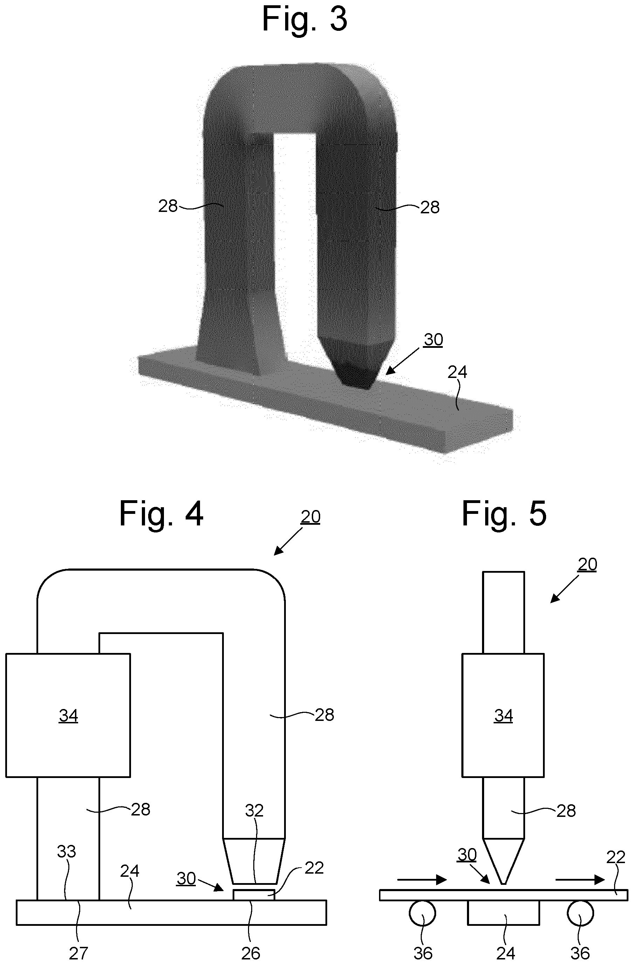

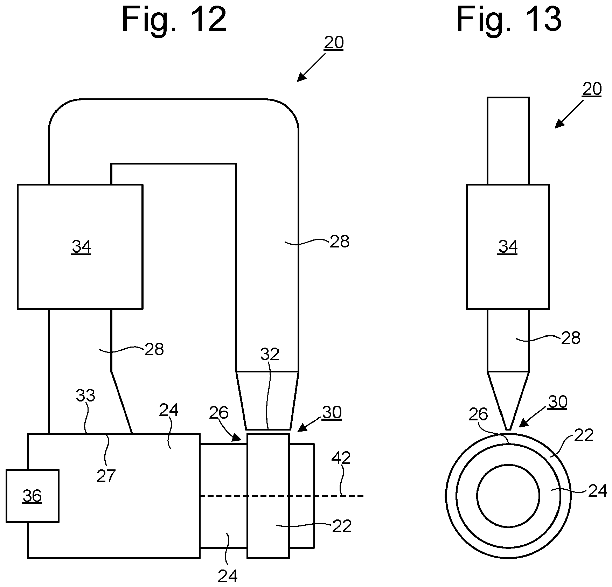

In some embodiments, as exemplified in Figures 3-5 and 9-13, a writing head 20 is provided that is configured to write a magnetization pattern to a magnetic scale 22. The magnetization pattern may comprise a sequence of bits defined by different magnetization states along a magnetization pattern path. Each bit may correspond to a portion of material along the magnetization pattern path. Each portion of material may have the same length (or a different length) and be writable to a selected one of a plurality of different magnetization states. In some embodiments, the magnetization states may include a state in which the magnetization points out of a plane of the magnetic scale (e.g. in a z-direction) and another state in which the magnetization points in the opposite direction. The magnetizations may thus be in the -z or +z-directions. For the writing of for example pseudo random sequences the portions of magnetized material may have different lengths at different positions along the magnetic scale 22.

The writing head 20 may comprise a support member 24. The support member comprises, consists essentially of, or consists of, a soft magnetic material. The support member 24 comprises a support surface 26 for supporting a magnetic scale 22. The support surface 26 may, for example, comprise an upwardly facing surface and the magnetic scale 22 may be positioned on top of the support surface 26. The writing head 20 further comprises a core member 28. The core member 28 comprises, consists essentially of, or consists of, a soft magnetic material.

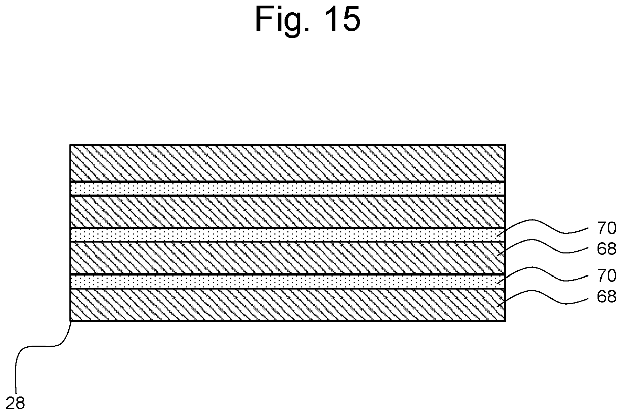

In some embodiments, either or both of the core member 28 and the support member 24 comprises a laminated structure having alternating layers of different electrical conductivity. An example laminated structure is depicted in Figure 15 in the context of an example portion of the core member 28. The laminated structure may comprise alternating layers of a first material 68 and a second material 70. The first material 68 may comprise any soft magnetic material, optionally with a saturation magnetization larger than 0.5 T. The second material 70 may comprise any material having a relatively low electrical conductivity, optionally smaller than 10³ S/m. The layer of first material 68 may preferably be thinner (e.g. smaller than 3mm) than the layer of second material 70. The laminated structure has the advantage of reducing eddy currents during operation of the writing head, where an AC current may be driven through a coil to magnetize the core member 28 (with the core member 28 acting as the core of the coil).

The core member 28 is shaped to provide a continuous path of the soft magnetic material between a writing pole surface 32 and a return pole surface 33. The writing pole surface 32 faces a first surface portion 26 of the support member 24. The writing pole surface 32 is spaced apart from the first surface portion 26 of the support member 24 to define a gap 30 for receiving a portion of a magnetic scale 22 to be written to. In some embodiments, the writing pole surface 32 is parallel to the first surface portion 26 of the support member 24. This configuration may facilitate minimization of an air gap between a magnetic scale 22 in the gap 30 and the writing pole surface 32. In some embodiments, the return pole surface 33 is parallel to the second surface portion 27 of the support member 24. This approach may facilitate minimization of a space between the return pole surface 33 and the second surface portion 27. The gap 30 is a region between the first surface portion 26 of the support member 24 and the writing pole surface 32 of the core member 28. The writing pole surface 32 faces the first surface portion 26 when the magnetic scale 22 is not present. The writing pole surface 32 faces the magnetic scale 22 when the magnetic scale 22 is present in the gap 30. In the example of Figures 3-5, the writing pole surface 32 thus faces downwards and the first surface portion 26 faces upwards. The writing pole surface 32 and the first surface portion 26 thus both face into the gap 30 when the magnetic scale 22 is not present.

The return pole surface 33 is configured to face, or to contact, a second surface portion 27 of the support member 24 to define a magnetic circuit. The magnetic circuit comprises the support member 24 and the core member 28. This configuration is advantageous since the magnetic flux can be predominantly closed between the core member 28, the magnetic scale 22 and the support member 24.

The gap 30 is desirably configured to be relatively small, for example of a similar size to the typical expected thickness of the magnetic scale 22. In an embodiment, a difference between the thickness of the portion of the magnetic scale 22 in the gap 30 and the size of the gap 30 is in the range of 0.001-5.Omm. A distance between the writing pole surface 32 and the magnetic scale 22 may thus be smaller than 5 mm, optionally smaller than 2mm.

The writing head 20 further comprises a coil 34 for generating a magnetic field in the magnetic circuit. When a portion of a magnetic scale 22 is provided in the gap 30, the generated magnetic field will pass through the portion of the magnetic scale 22 and thereby allow the portion of the magnetic scale 22 to be magnetized in accordance with a desired magnetization pattern. For example, by driving current through the coil 34 in a first sense it may be possible to magnetize a portion of the magnetic scale 22 corresponding to one bit in a +z direction. If the current were driven through the coil 34 in the opposite sense the same portion of the magnetic scale 22 could be magnetized in the -z direction.

Providing the magnetic circuit in the manner described above, with the core member 28 shaped to provide the writing pole surface 32 facing towards the first surface portion 26, allows the portion of the magnetic circuit completed by air to be minimized. For the same applied current in the coil 34 it is possible to apply a higher magnetic field to the magnetic scale 22 than would be possible using arrangements with simpler core member geometries, such as those discussed above with reference to Figures 1 and 2 and commonly used in the prior art. The core member 28 geometry may also provide a greater length over which to provide the coil 34, which may facilitate use of higher currents, which further increases the size of magnetic fields that can be applied. It is also possible to use two, three or more coils along the core member 28 to magnetize the core material.

The composition of the soft magnetic material of the support member 24 and/or of the core member 28 is not particularly limited but will generally comprise a soft magnetic material having high permeability, low magnetic losses and/or low coercivity. Any of various materials known for use in magnetic cores of transformers, motors, inductors and generators may be used, including for example unalloyed iron, silicon-iron, and aluminium iron alloys. In some embodiments, the soft magnetic material may comprise an alloy comprising Co, Fe and/or Ni, such as a CoFe alloy or a NiFe alloy. These alloys may comprise elements of Si, B, Si and/or P. Suitable alloys may thus include CoFeSi, CoSiB, FeSiB, NiSiB, FeB, PdSi, and/or FeCuNbSiB. The soft magnetic material may be a nanocrystalline soft magnetic material or an amorphous magnetic material. In some embodiments the soft magnetic material is a material having a saturation magnetization larger than 0.5 T.

In some embodiments, the writing head 20 further comprises a conveying unit 36. The conveying unit 36 causes relative movement between the writing pole surface 32 and the magnetic scale 22 supported by the support surface 26. The relative movement allows a magnetization pattern to be formed along a magnetization pattern path by bringing portions of the magnetic scale corresponding to different individual bits sequentially into position in the gap 30. In some embodiments, the conveying unit 36 moves the writing pole surface 32 while holding the support surface 26 stationary. This approach allows high quality writing to be achieved while minimizing stresses applied to the magnetic scale and/or simplifying constructional requirements of the support member 24.

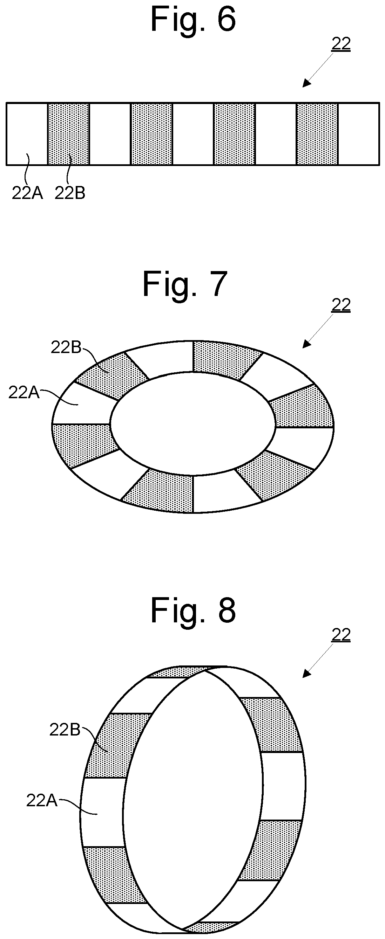

The magnetic scale 22 may take various forms, both planar and curved. Some examples are depicted schematically in Figures 6-8, with an illustrative alternating pattern of magnetizations labelled respectively 22A and 22B.

In the case where the magnetic scale 22 is planar, the support surface 26 may also be planar. As exemplified in Figures 3-5, in some embodiments having a planar support surface 26, the conveying unit 36 causes the magnetization pattern to be written along a linear magnetization pattern path, for example by providing a corresponding linear motion of the magnetic scale 22 through the gap 30. This approach may form a linear magnetic scale, for example as shown schematically in Figure 6. In some embodiments, this approach is implemented by moving the writing pole surface 32 linearly and holding the support surface 26 stationary. As mentioned above, this may minimize stress on the magnetic scale and/or simplify constructional requirements of the support member 24.

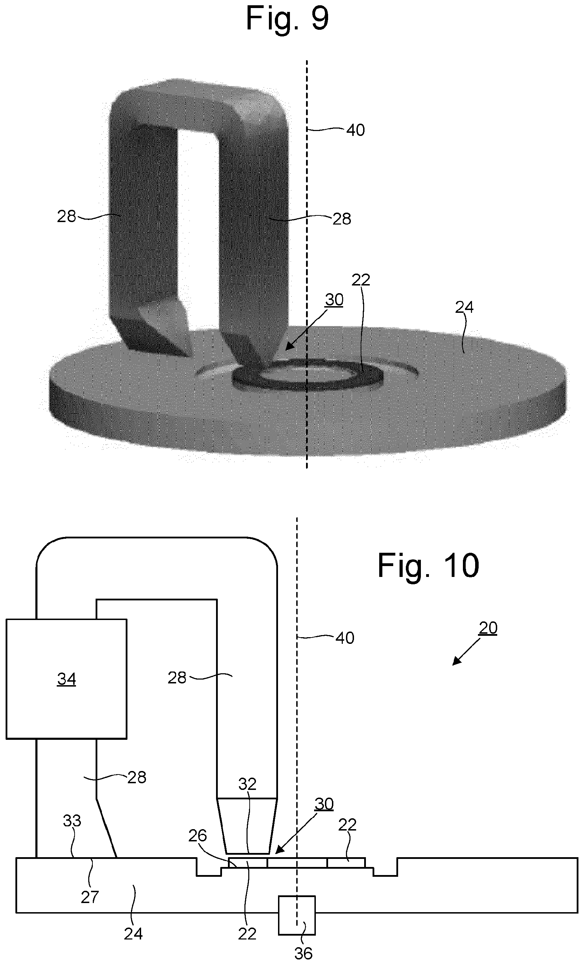

As exemplified in Figures 9 and 10, in other embodiments where the substrate surface 26 is configured to support a planar magnetic scale 22, the conveying unit 36 may cause the magnetization pattern to be written along a curved magnetization pattern path. The curved magnetization pattern path may be circular or spiral for example. In the particular example of Figures 9 and 10, the magnetization pattern path is circular and is suitable for forming a circular magnetic scale, for example as shown schematically in Figure 7. The conveying unit 36 may be configured to provide the relative movement between the writing pole surface 32 and the magnetic scale 22 by rotating either or both of the writing pole surface 32 and the support surface 26. In the example shown, the conveying unit 36 rotates the support member 24 about vertical axis 40 to provide rotation of the support surface 26. The core member 28 may be configured in such embodiments so that a spacing between the return pole surface 33 and the second surface portion 27 of the support member 24 is very small. This approach allows the rotation to take place while maintaining continuity of the magnetic circuit. In some embodiments, as exemplified in Figures 9 and 10, the conveying unit 36 causes the magnetization pattern to be written along a curved magnetization pattern path by rotating the support member 24 about a rotation axis 40 wherein a distance between the rotation axis 40 and a centroid of the writing pole surface 32 is different from a distance between the rotation axis 40 and a centroid of the return pole surface 33. This geometry facilitates application of high magnetic fields to the magnetic scale material by providing room for the return pole surface to complete the magnetic circuit effectively.

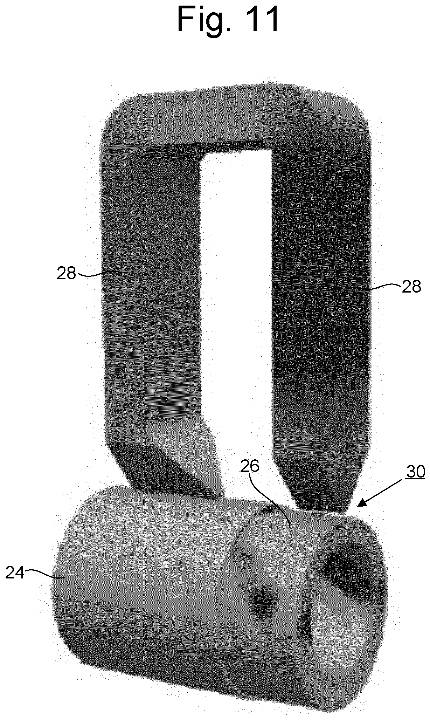

As exemplified in Figures 11-13, in some embodiments the support surface 26 is configured to support a non-planar magnetic scale 22. The non-planar magnetic scale 22 may be tubular, such as cylindrical. An example of such a magnetic scale 22 is depicted schematically in Figure 8. The conveying unit 36 may be configured to provide the relative movement between the writing pole surface 32 and the magnetic scale 22 by rotating either or both of the writing pole surface 32 and the support surface 26. In some embodiments, the support member 24 is rotated about an axis parallel to the writing pole surface 32. This geometry facilitates application of high magnetic fields to the magnetic scale material by providing room for the return pole surface to complete the magnetic circuit effectively. In the example shown, the conveying unit 36 rotates the support member 24 about horizontal axis 42 to provide rotation of the support surface 26. The core member 28 may be configured in such embodiments so that a spacing between the return pole surface 33 and the second surface portion 27 of the support member 24 is very small. This approach allows the rotation to take place while maintaining continuity of the magnetic circuit.

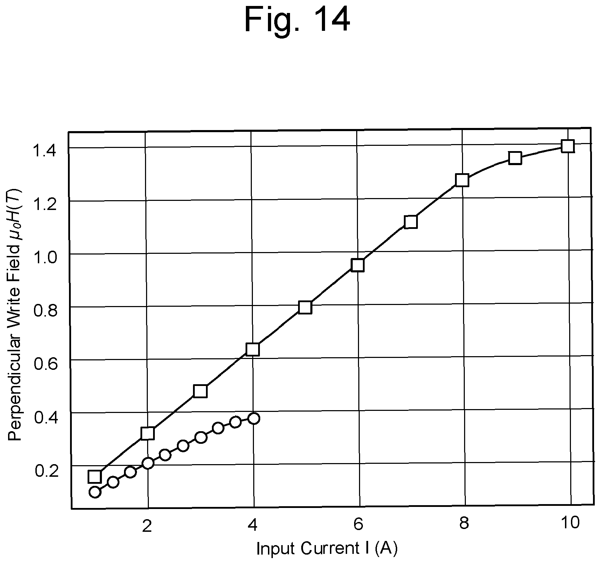

As mentioned above, embodiments of the present disclosure facilitate use of larger magnetic fields when writing magnetization patterns to magnetic scales. In some embodiments, this capability is exploited to use magnetic scales that comprise, consists essentially of, or consist of, material having a magnetic remanence that is at least 1.5 times as high, optionally at least 2.5 times as high, optionally at least 3 times as high, as the magnetic remanence of ferrite. The higher magnetic field overcomes the higher coercivities present in such materials. Writing to magnetic scales with higher remanence makes it possible to provide longer reading distances, as well as improved stability and/or durability of the encoded magnetic scales. In some embodiments, the magnetic scale comprises one or more of the following: NdFeB, AlNiCo, SmFeN. SmCo, Sm (Co-Fe-Cu_zr), Sm-Pr-Co type magnets. Due to the large write fields of the presented embodiments, also the field gradients in down track direction are large. Large field gradients are beneficial to write well defined bits. Hence, the present design is also suitable to write standard scale materials consisting of ferrite materials, such as Ba or Sr - Ferrite materials. Figure 14 is a graph showing perpendicular write fields that have been achieved using a write head according to an embodiment of the disclosure (square data points) in comparison with a typical prior art system (circular data points), as a function of input current to a driving coil (horizontal axis). As can be seen, for all input currents up to 4A the write field of the embodiment is substantially higher than is achieved by the prior art system. Furthermore, the embodiment can handle higher input currents, which further increases the size of the write field that is achievable. NdFeB shows a coercive field of about *H_{C}* = 0.7 T, so can be encoded by the embodiment (which is capable of provided up to a 1.4 T perpendicular write field) but not by the prior art system.

Further embodiments of the disclosure are defined in the following numbered clauses.
1. A writing head for writing a magnetization pattern to a magnetic scale, the writing head comprising:
   a support member comprising soft magnetic material and a support surface for supporting a magnetic scale;
   a core member comprising soft magnetic material, the core member being shaped to provide a continuous path of the soft magnetic material between a writing pole surface and a return pole surface, the writing pole surface facing towards and being spaced apart from a first surface portion of the support member to define a gap for receiving a portion of a magnetic scale to be written to, the return pole surface being configured to face, or to contact, a second surface portion of the support member to define a magnetic circuit comprising the support member and the core member; and
   a coil for generating a magnetic field in the magnetic circuit such that when a portion of a magnetic scale is provided in the gap the generated magnetic field will pass through the portion of the magnetic scale.
2. The writing head of clause 1, wherein the writing pole surface is parallel to the first surface portion of the support member.
3. The writing head of clause 1 or 3, wherein the return pole surface is parallel to the second surface portion of the support member.
4. The writing head of any preceding numbered clause, wherein either or both of the core member and the support member comprises a laminated structure having alternating layers of different electrical conductivity.
5. The writing head of any preceding numbered clause, wherein either or both of the core member and the support member comprises a laminated structure having alternating layers of a first material and a second material, wherein the first material has a saturation magnetization larger than 0.5 T and the second material has an electrical conductivity smaller than 10³ S/m.
6. The writing head of any preceding numbered clause, further comprising a conveying unit configured to cause relative movement between the writing pole surface and a magnetic scale supported by the support surface in order to form a magnetization pattern along a magnetization pattern path.
7. The writing head of clause 6, wherein the conveying unit is configured to move the writing pole surface while holding the support surface stationary.
8. The writing head of clause 6 or 7, wherein the support surface is configured to support a planar magnetic scale.
9. The writing head of clause 8, wherein the conveying unit is configured to cause the magnetization pattern to be written along a linear magnetization pattern path.
10. The writing head of clause 9, wherein the conveying unit is configured to cause the magnetization pattern to be written along the linear magnetization pattern path by moving the writing pole surface linearly and holding the support surface stationary.
11. The writing head of clause 8, wherein the conveying unit is configured to cause the magnetization pattern to be written along a curved magnetization pattern path.
12. The writing head of clause 11, wherein the curved path is circular or spiral.
13. The writing head of clause 11 or 12, wherein the conveying unit is configured to cause the magnetization pattern to be written along the curved magnetization pattern path by rotating the support member about a rotation axis, wherein a distance between the rotation axis and a centroid of the writing pole surface is different from a distance between the rotation axis and a centroid of the return pole surface.
14. The writing head of clause 6 or 7, wherein the support surface is configured to support a non-planar magnetic scale.
15. The writing head of clause 14, wherein the non-planar magnetic scale is tubular or cylindrical.
16. The writing head of clause 14 or 15, wherein the conveying unit is configured to rotate either or both of the core member and the support surface to provide the relative movement.
17. The writing head of clause 16, wherein the conveying unit is configured to rotate the support member about an axis parallel to the writing pole surface.
18. The writing head of any preceding numbered clause, comprising the magnetic scale supported by the support surface.
19. The writing head of clause 18, wherein a difference between the thickness of the portion of the magnetic scale in the gap and the size of the gap is in the range of 0.001-5.Omm.
20. The writing head of clause 18 or 19, wherein the magnetic scale comprises material having a magnetic remanence that is higher than the magnetic remanence of ferrite by at least a factor of 1.5.
21. The writing head of any of clauses 18-20, wherein the magnetic scale comprises one or more of the following: NdFeB, AlNiCo, SmFeN, and SmCo.
22. The writing head of any of clauses 18-21, wherein the magnetic scale comprises a crystalline film in which a crystalline easy axis is perpendicular to the film surface.
23. A method of writing a magnetization pattern to a magnetic scale, comprising:
   providing a core member comprising soft magnetic material, the core member being shaped to provide a continuous path of the soft magnetic material between a writing pole surface and a return pole surface, the writing pole surface facing towards and being spaced apart from a first surface portion of a support member to define a gap for receiving a portion of a magnetic scale to be written to, the return pole surface being configured to face, or to contact, a second surface portion of the support member to define a magnetic circuit comprising the support member and the core member;
   providing a portion of a magnetic scale in the gap and supported by the support member; and
   generating a magnetic field in the magnetic circuit that passes through the portion of the magnetic scale.

## Claims

1. A writing head for writing a magnetization pattern to a magnetic scale, the writing head comprising:
a support member comprising soft magnetic material and a support surface for supporting a magnetic scale;
a core member comprising soft magnetic material, the core member being shaped to provide a continuous path of the soft magnetic material between a writing pole surface and a return pole surface, the writing pole surface facing towards and being spaced apart from a first surface portion of the support member to define a gap for receiving a portion of a magnetic scale to be written to, the return pole surface being configured to face, or to contact, a second surface portion of the support member to define a magnetic circuit comprising the support member and the core member; and
a coil for generating a magnetic field in the magnetic circuit such that when a portion of a magnetic scale is provided in the gap the generated magnetic field will pass through the portion of the magnetic scale.

2. The writing head of claim 1, wherein the writing pole surface is parallel to the first surface portion of the support member and/or the return pole surface is parallel to the second surface portion of the support member.

3. The writing head of claim 1 or 2, wherein either or both of the core member and the support member comprises a laminated structure having alternating layers of different electrical conductivity.

4. The writing head of any preceding claim, wherein either or both of the core member and the support member comprises a laminated structure having alternating layers of a first material and a second material, wherein the first material has a saturation magnetization larger than 0.5 T and the second material has an electrical conductivity smaller than 10³ S/m.

5. The writing head of any preceding claim, further comprising a conveying unit configured to cause relative movement between the writing pole surface and a magnetic scale supported by the support surface in order to form a magnetization pattern along a magnetization pattern path, the conveying unit being preferably configured to move the writing pole surface while holding the support surface stationary.

6. The writing head of claim 5, wherein the support surface is configured to support a planar magnetic scale.

7. The writing head of claim 6, wherein:
the conveying unit is configured to cause the magnetization pattern to be written along a linear magnetization pattern path, preferably by moving the writing pole surface linearly and holding the support surface stationary; or
the conveying unit is configured to cause the magnetization pattern to be written along a curved magnetization pattern path, preferably by rotating the support member about a rotation axis wherein a distance between the rotation axis and a centroid of the writing pole surface is different from a distance between the rotation axis and a centroid of the return pole surface.

8. The writing head of claim 5, wherein the support surface is configured to support a non-planar, preferably tubular or cylindrical, magnetic scale.

9. The writing head of claim 8, wherein the conveying unit is configured to rotate either or both of the core member and the support surface to provide the relative movement, and preferably to rotate the support member about an axis parallel to the writing pole surface.

10. The writing head of any preceding claim, comprising the magnetic scale supported by the support surface.

11. The writing head of claim 10, wherein a difference between the thickness of the portion of the magnetic scale in the gap and the size of the gap is in the range of 0.001-5.0mm.

12. The writing head of claim 10 or 11, wherein the magnetic scale comprises material having a magnetic remanence that is higher than the magnetic remanence of ferrite by at least a factor of 1.5.

13. The writing head of any of claims 10-12, wherein the magnetic scale comprises one or more of the following: NdFeB, AlNiCo, SmFeN, and SmCo.

14. The writing head of any of claims 10-13, wherein the magnetic scale comprises a crystalline film in which a crystalline easy axis is perpendicular to the film surface.

15. A method of writing a magnetization pattern to a magnetic scale, comprising:
providing a core member comprising soft magnetic material, the core member being shaped to provide a continuous path of the soft magnetic material between a writing pole surface and a return pole surface, the writing pole surface facing towards and being spaced apart from a first surface portion of a support member to define a gap for receiving a portion of a magnetic scale to be written to, the return pole surface being configured to face, or to contact, a second surface portion of the support member to define a magnetic circuit comprising the support member and the core member;
providing a portion of a magnetic scale in the gap and supported by the support member; and
generating a magnetic field in the magnetic circuit that passes through the portion of the magnetic scale.
